# EUROPÄISCHE PATENTSCHRIFT

(11) **EP 2 811 575 B1**
(45) Veröffentlichungstag und Bekanntmachung des Hinweises auf die Patenterteilung: **12.08.2015**
(21) Anmeldenummer: 13170516.2
(22) Anmeldetag: 04.06.2013
(51) Int. Cl.: H01Q 9/04, H01Q 13/16, G06K 7/10, H01Q 1/22

(54) **Antenne**
Antenna
Antenne

(43) Veröffentlichungstag der Anmeldung: 10.12.2014
(73) Patentinhaber: SICK AG, 79183 Waldkirch (DE)
(72) Erfinder: Pudenz, Florian, 22049 Hamburg (DE)
(74) Vertreter: Hehl, Ulrich

(56) Entgegenhaltungen:
- WO-A1-2010/036955
- US-A1- 2002 175 874
- US-A1- 2006 132 359
- US-A1- 2008 309 567
- TARGONSKI S D ET AL: "DESIGN OF WIDEBAND CIRCULARLY POLARIZED APERTURE-COUPLED MICROSTRIP ANTENNAS", IEEE TRANSACTIONS ON ANTENNAS AND PROPAGATION, IEEE SERVICE CENTER, PISCATAWAY, NJ, US, Bd. 41, Nr. 2, Februar 1993 (1993-02), Seiten 214-220, XP000303629, ISSN: 0018-926X, DOI: 10.1109/8.214613

## Beschreibung

Die Erfindung betrifft eine Antenne mit einer Grundplatine und einem Schlitz nach dem Oberbegriff von Anspruch 1 sowie ein entsprechendes Verfahren zum Aussenden und/oder Empfangen von elektromagnetischen Signalen.

Eine derartige Antenne wird beispielsweise in einem RFID-Lesesystem (Radio Frequency Identification) benötigt. Solche RFID-Lesesysteme dienen der Identifikation von Objekten und Waren und werden unter anderem eingesetzt, um logistische Bewegungen zu automatisieren. An einem Identifikationspunkt, vor allem bei einem Wechsel des Besitzers der Ware oder einem Wechsel des Transportmittels, werden an den Waren befestigte RFID-Transponder ausgelesen und gegebenenfalls Informationen in den Transponder zurückgeschrieben. Dies führt zu schnellen und nachvollziehbaren Logistikbewegungen. Die erfassten Informationen werden verwendet, um die Weiterleitung und Sortierung von Gütern und Produkten zu steuern. Wichtige Anwendungen für die automatische Identifikation sind logistische Verteilerzentren, etwa von Paketversendern, oder die Gepäckaufgabe in Flughäfen.

Ein häufiger Einsatzort eines RFID-Lesesystems ist die Montage an einem Förderband, auf dem die Waren gefördert werden, oder in einem sogenannten Leseportal. Darunter ist ein beliebiger Durchgang zu verstehen, welcher mit einem oder mehreren RFID-Lesern und möglicherweise weiteren Sensoren ausgestattet ist. Objekte werden mittels eines Förderbandes, eines Transportfahrzeugs, wie ein Gabelstapler, oder auch von Hand durch das Leseportal bewegt und dabei anhand ihres RFID-Transponders identifiziert.

RFID-Transponder können prinzipiell aktiv sein, also eine eigene Energieversorgung aufweisen, oder passiv ausgeführt sein. Unabhängig davon, ob es sich um aktive oder passive Komponenten handelt, sind RFID Transponder, die nach dem Backscatter-Prinzip arbeiten, dadurch charakterisiert, dass sie das Sendesignal des Lesegerätes reflektieren und dabei durch Modulation in der Amplitude verändern. Sie erzeugen dabei kein eigenes Hochfrequenzsignal. In der Praxis eignen sich aktive Transponder für die Logistik aber weniger, weil durch die Energieversorgung die Stückpreise solcher Transponder nicht das für den Massenmarkt erforderliche geringe Niveau erreichen können. Deshalb werden zumeist passive Transponder ohne eigene Energieversorgung eingesetzt. In beiden Fällen wird durch elektromagnetische Strahlung des Lesegerätes der Transponder zur Abstrahlung der gespeicherten Information angeregt, wobei passive Transponder die notwendige Energie aus der Sendeenergie des Lesesystems beziehen. In dem etablierten Ultrahochfrequenzstandard (UHF) ISO 18000-6 werden passive Transponder nach dem Backscatter-Verfahren ausgelesen.

Da ein Großteil der verfügbaren Transponder linear polarisiert ist und die Ausrichtung des Transponders zur Antenne des Lesegerätes in vielen Applikationen nicht eindeutig definiert werden kann, werden bevorzugt zirkular polarisierte Antennen für den Einsatz in RFID-Lesegeräten verwendet.

Damit ein Gerät wie ein RFID-Lesesystem, das elektromagnetische Wellen sendet und empfängt, möglichst kompakt aufgebaut werden kann, besteht der Wunsch nach entsprechend kompakten Antennen. Dabei hängt die benötigte Antennengröße von der Frequenz ab. Diese wiederum ist kein freier Parameter, da beispielsweise für UHF ein Frequenzbereich zwischen 850 MHz und 950 MHz vorgesehen ist, innerhalb dessen länderspezifisch bestimmte Frequenzen genutzt werden.

Im Stand der Technik sind auf Mikrostreifenleitungen (micro strip) basierende Antennen bekannt, die mittels kapazitiver Kopplung über einen Schlitz gespeist werden. Derartige Antennen werden beispielsweise in dem Artikel von David Pozar, "A Review of Aperture Coupled Microstrip Antennas: History, Operation, Development, and Applications", Electrical and Computer Engineering, University of Massachusetts at Amherst, Amherst, MA 01003, Mai 1996 vorgestellt. Dabei sind aber stets gerade, langgestreckte Schlitze vorgesehen, welche die mögliche Miniaturisierung der Antenne begrenzen.

Die WO 02/065581 A1 zeigt eine geschichtete Patchantenne mit drei Schichten. Die mittlere Schicht weist einen Schlitz in Nachbarschaft zu einer Speisungsleitung auf. In weiteren Ausführungsformen sind zwei zueinander orthogonale oder sich kreuzende Schlitze vorgesehen, um voneinander entkoppelte horizontal und vertikal polarisierte Signale oder ein zirkular polarisiertes Signal zu senden beziehungsweise zu empfangen. Die Schlitze sind aber auch hier in sämtlichen Ausführungsformen gerade und langgestreckt.

In der US 6 897 809 B2 wird ein kompaktes Antennensystem mit mindestens einem Patchelement beschrieben. In einer Grundplatine sind Schlitze zur Kopplung des Antennensignals zwischen Patch und Speisungsleitung vorgesehen. Diese Schlitze sind ebenfalls langgestreckt, können aber an den Enden kreisförmige Vergrößerungen aufweisen ("dogbone shape"). Erneut wird die Miniaturisierung durch die langgestreckte Form der Schlitze begrenzt.

Der Artikel von Alexander Popugaev et al., "A Novel Miniaturization Technique in Microstrip Feed Network Design", EuCAP 2009, 3rd European Conference on Antennas and Propagation, 23-27 March 2009, Berlin, ISBN 978-3-8008-3152-7, schlägt für die Speisung einer Antenne ein Netzwerk in Streifenleitungstechnik vor, das aus einem Raster von Ringsegmenten gebildet ist. Dieser Artikel befasst sich jedoch nicht mit der Einkopplung über Schlitze.

Die US 2006/132359 A1 offenbart eine zirkular polarisierte Flächenantenne mit einem rechteckigen Patch und einem Substrat. In dem Substrat ist auf der einen Seite ein kreuzförmiger Schlitz und an der anderen Seite ein mit einer Signalleitung verbundener Metalldraht angebracht.

Aus der US 2002/0175874 A1 ist eine fraktale Kreuzschlitzantenne bekannt. Das bedeutet, dass die Arme des kreuzförmigen Schlitzes dieser Antenne nicht gerade, sondern in ein fraktales Muster gebogen sind.

Die US 2008/0309567 A1 beschreibt eine Antenne für ein tragbares RFID-Lesegerät. Dessen Antenne ist eine Schlitzantenne mit einem mäanderartigen Schlitz. Dieser Schlitz verläuft im Wesentlichen parallel zu zwei benachbarten Kanten der rechteckigen Antennenstruktur, weist aber dabei zusätzlich mehrere rechteckförmige Ausbuchtungen auf.

Die WO 2010/036955 A1 zeigt ebenfalls eine mäanderartige Schlitzantenne. Hier befindet sich der Schlitz aber eher zentral und besteht aus nur wenigen Rechteckschwüngen.

Die Arbeit von S. Targonski, "Design of Wideband Circularly Polarized Aperture-Coupled Microstrip Antennas", IEEE Transactions on Antennas and Propagation 41(1993), No. 2, Seiten 214-220 befasst sich mit der Speisung von Patchantennen. Die Grundplatine weist dabei einen einfachen oder kreuzförmigen Schlitz auf.

Es ist daher Aufgabe der Erfindung, eine möglichst kompakte Antennenform zu finden.

Diese Aufgabe wird durch eine Antenne mit einer Grundplatine und einem Schlitz nach Anspruch 1 sowie ein entsprechendes Verfahren zum Aussenden und/oder Empfangen von elektromagnetischen Signalen gelöst. Dabei geht die Erfindung von dem Grundgedanken aus, den Schlitz zur Einkopplung des Antennensignals zu falten. Die erforderliche Schlitzlänge steigt nämlich mit der Wellenlänge des zu übertragenden Signals, da sie näherungsweise der halben Wellenlänge der gewünschten Resonanzfrequenz entspricht. Durch die Faltung wird es möglich, den Schlitz bei gleicher wirksamer Länge auf einer Platine mit kleineren Abmessungen unterzubringen. Die Schlitzstruktur als Ganzes kann also kleinere äußere Abmessungen haben als die halbe Wellenlänge der gewünschten Resonanzfrequenz. Nochmals anders ausgedrückt kann ein die erfindungsgemäße Schlitzstruktur umschreibendes Rechteck kürzer und breiter sein als ein herkömmlicher, gerade ausgebildeter Schlitz.

Die Erfindung hat damit den Vorteil, dass die Grundplatine zur Kopplung des Antennensignals besonders klein bleiben kann. Dadurch wird eine sehr kompakte Bauform der Antenne ermöglicht.

Die Antenne weist bevorzugt parallel zu der Grundplatine einen flächenartigen Resonator auf. Ein derartiger Resonator wird üblicherweise als Patch bezeichnet und ist eine dünne, leitende Materialschicht, in der Regel ein Metall, die sich besonders zur Integration auf einer Platine eignet. Das Signal wird von der Kontaktierung über den Schlitz kapazitiv in den Resonator eingekoppelt oder umgekehrt. Der Resonator kann auf der Grundplatine oder einer eigenen Platine vorgesehen sein, die auch durch einen zusätzlichen Luftspalt oder ein zusätzliches Dielelektrikum von der Grundplatine beabstandet sein kann. Obwohl prinzipiell ein reiner Schlitzstrahler als Antenne denkbar ist, verbessert ein Resonator die Antenneneigenschaften erheblich.

Der Schlitz weist vorzugsweise mehrere Bögen auf. Das ist eine einfache Möglichkeit, durch Faltung das zweidimensionale Muster zu erhalten. Bögen vermeiden Sprünge oder andere Unregelmäßigkeiten, welche die Kopplung beeinträchtigen würden.

Ein mittlerer Bogen weist bevorzugt die größte Höhe auf, und Bögen zu den Seiten weisen mit zunehmendem Abstand von dem mittleren Bogen eine geringere Höhe auf. Ein mittlerer Bogen größter Höhe umfasst auch die Möglichkeit von zwei nebeneinander liegenden höchsten mittleren Bögen. Die Höhe der Bögen nimmt vorzugsweise gleichmäßig ab. Es gibt also eine linear abfallende Umhüllende der Bögen. Es ist sowohl denkbar, dass die Bögen jeweils auf einer gemeinsamen Grundlinie enden, als auch eine Art Sinusschwingung um die Grundlinie. Das von den Bögen gebildete zweidimensionale Muster ist zu dessen Mittenachse vorzugsweise symmetrisch.

Der Schlitz weist vorzugsweise vergrößerte Endpunkte auf. Die Schlitze münden also an ihren Enden in gegenüber der Breite des Schlitzes größeren, vorzugsweise kreisförmigen Öffnungen. Damit werden Randeffekte kompensiert und eine gleichmäßige, effiziente Kopplung erreicht.

Die Grundplatine weist bevorzugt zwei Schlitze auf. Diese Schlitze können in allen beschriebenen geometrischen Varianten ausgestaltet sein. Jeder Schlitz weist eine Kontaktierung zum Einspeisen und/oder Abgreifen eines elektromagnetischen Signals auf. Die beiden Schlitze sind gegeneinander verdreht, vorzugsweise in einem rechten Winkel. Durch solche Schlitze können quer oder orthogonal zueinander polarisierte Signale eingekoppelt werden.

In einer bevorzugten Ausführungsform schneiden die beiden Schlitze einander. Das ermöglicht eine noch effektivere Flächennutzung der Grundplatine. Die Faltungen der Schlitze können in einem Bereich der gegenseitigen Überschneidung weniger ausgeprägt oder gar nicht vorgenommen sein, damit die Schlitze sich möglichst wenig berühren beziehungsweise nahe kommen.

Die beiden Schlitze weisen bevorzugt jeweils eine Kontaktierung auf, die von einer Streifenleitung gebildet ist. Die Einspeisung erfolgt also in Streifenleitungstechnik (micro strip). Am Endpunkt der Kontaktierung kann ein vergrößerter Bereich vorgesehen sein. Die Kontaktierung erfolgt vorzugsweise in der Mitte des jeweiligen Schlitzes. Sofern dieser eine Bogenstruktur aufweist, endet die Streifenleitung vorzugsweise jeweils in dem mittleren Bogen des zugehörigen Schlitzes mit einem langgestreckten Leitungsbereich parallel zu den beiden Flanken des mittleren Bogens. Über die beiden Streifenleitungen können zwei unabhängige Signale mit unterschiedlicher linearer Polarisation oder ein zirkular polarisiertes Signal eingespeist oder abgegriffen werden.

Die Streifenleitungen bilden bevorzugt einen Leistungsteiler. Darin wird das eingespeiste Signal für eine zirkulare Polarisation in zwei gleich große, um 90° zueinander phasenversetzte Signalanteile aufgespaltet. Dies kann durch entsprechende geometrische Gestaltung der Streifenleitungen erreicht werden und spart ein eigenes Bauteil für den Leistungsteiler ein.

Die Streifenleitungen sind bevorzugt in sich gefaltet sind und bilden so ein zweidimensionales Muster auf der Grundplatine. Durch eine derartige mäanderartige Struktur kann der Platzbedarf für die Streifenleitungen verringert werden.

Die Streifenleitungen bilden besonders bevorzugt die Grundform eines Rechtecks, welches an seinen Seiten eine Vielzahl von Bögen aufweist. Diese Bögen haben insbesondere untereinander gleiche Abmessungen.

Die Streifenleitungen bilden bevorzugt an den Schmalseiten des Rechtecks eine Ausbuchtung nach Innen, die größer ist als die Bögen. Hier wird also der Platzbedarf für die Streifenleitungen nicht allein durch die Bögen verringert, sondern zusätzlich der Innenraum des Rechtecks genutzt.

In bevorzugter Weiterbildung ist eine RFID-Lesevorrichtung mit mindestens einer erfindungsgemäßen Antenne zum Senden von RFID-Signalen an einen RFID-Transponder und/oder zum Empfangen von RFID-Signalen von einem RFID-Transponder vorgesehen, wobei die RFID-Lesevorrichtung weiterhin eine Auswertungseinheit zum Eincodieren einer RFID-Information in die RFID-Signale und/oder zum Auslesen einer RFID-Information aus den RFID-Signalen aufweist. Die Antenne ermöglicht eine besonders kompakte Bauform der RFID-Lesevorrichtung, während sie weiterhin das benötigte Frequenzband beispielsweise im UHF-Bereich abdeckt. Eine solche RFID-Lesevorrichtung wird bevorzugt in stationärer Montage an einem Lesebereich eines Förderers oder eines Leseportals zum Auslesen mindestens eines auf dem Förderer oder durch das Leseportal bewegten RFID-Transponders eingesetzt.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische dreidimensionale Übersichtsdarstellung des Einsatzes eines RFID-Lesers an einem Förderband;
- Fig. 2: eine Blockdarstellung eines RFID-Lesers;
- Fig. 3: eine schematische Darstellung des Schichtaufbaus einer Antenne;
- Fig. 4: eine Draufsicht auf eine Grundplatine mit einer gefalteten Schlitzstruktur in einer Ausführungsform der Erfindung;
- Fig. 5: eine Draufsicht auf eine Grundplatine mit einer gefalteten Schlitzstruktur in einer weiteren Ausführungsform der Erfindung; und
- Fig. 6: eine Unteransicht einer Grundplatine mit einer gefalteten Schlitzstruktur auf ebenfalls gefaltete Speisungsleitungen, die einen Leistungsteiler bilden.

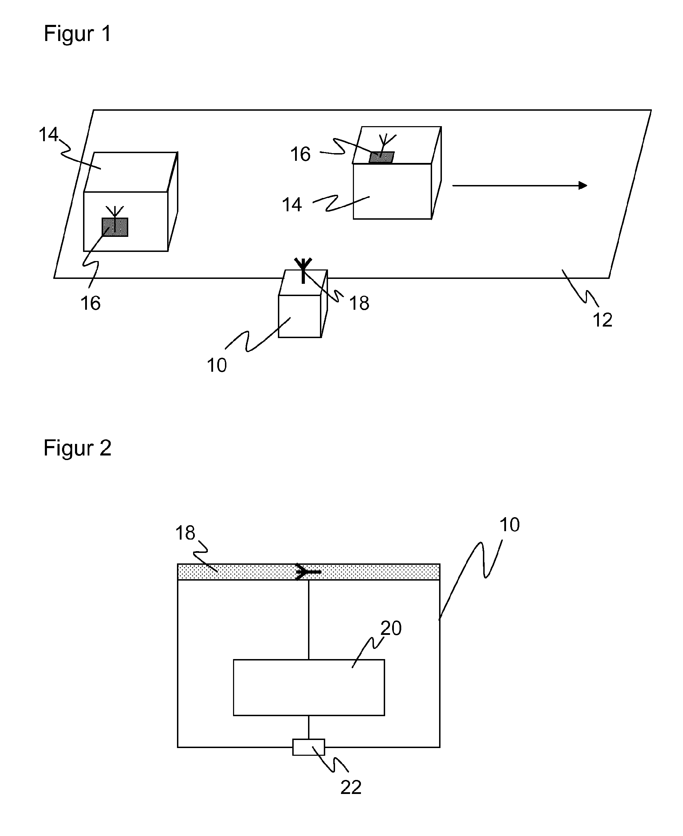

Figur 1 zeigt eine schematische Übersichtsdarstellung eines RFID-Lesers 10, der an einem Förderband 12 montiert ist. Objekte 14, die mit RFID-Transpondern 16 versehen sind, werden auf dem Förderband 12 an dem RFID-Leser 10 vorbeibewegt. Aufgabe des RFID-Lesers 10 ist, Signale von den RFID-Transpondern 16 zu empfangen, um eine darin gespeicherte Information auszulesen. Je nach Anwendung kann auch umgekehrt vorgesehen sein, dass der RFID-Leser 10 Informationen auf einem RFID-Transponder 16 ablegt.

Zu diesem Zweck weist der RFID-Leser 10 eine Lese-Empfangsantenne 18 zum Empfangen von RFID-Signalen auf. Die Antenne 18 kann außerdem als Sendeantenne für Schreibvorgänge auf einem RFID-Transponder 16 und zur Versorgung von RFID-Transpondern 16 mit einem Trägersignal verwendet werden. Alternativ ist hierfür eine nicht dargestellte separate Sendeantenne vorgesehen. Der genauere Aufbau eines RFID-Lesers 10 und eines Transponders 16 sowie deren Kommunikation untereinander sind dem Fachmann an sich bekannt und werden deshalb hier nicht näher erläutert.

Figur 2 zeigt den RFID-Leser 10 in einer sehr vereinfachten Blockdarstellung. Eine Steuer- und Auswertungseinheit 20 des RFID-Lesers 10 ist mit der Antenne 18 verbunden, um mittels der Antenne 18 empfangene RFID-Signale auszuwerten oder Informationen als RFID-Signale an einen Transponder zu senden. Die Steuer- und Auswertungseinheit 20 ist weiterhin mit einer drahtgebundenen oder drahtlosen Schnittstelle 22 verbunden, um Daten auszutauschen, Parametrierungen vorzunehmen und dergleichen.

Das gegenüber bekannten RFID-Lesern 10 verbesserte Element ist die Antenne 18, die in Figur 2 nur schematisch dargestellt ist. Die Antenne 18 wird vorzugsweise an zwei Punkten gespeist, um zirkular polarisierte Wellen auszusenden. Eine zirkulare Polarisation bei Speisung an lediglich einem oder an mehr als zwei Punkten kann jedoch auch realisiert werden. Auch eine entsprechende Antennenstruktur mit lediglich einem Speisepunkt für lineare Polarisation oder mit zwei Speisepunkten für unterschiedliche lineare Polarisationen ist denkbar. Für eine einfache Herstellung wird die Antenne 18 weiterhin bevorzugt als Patchantenne ausgeführt, deren Resonator von einer dünne Metallschicht gebildet wird. Die Antenne 18 wurde im Zusammenhang mit dem Beispiel eines RFID-Lesers 10 eingeführt, kann aber auch in anderen Geräten eingesetzt werden.

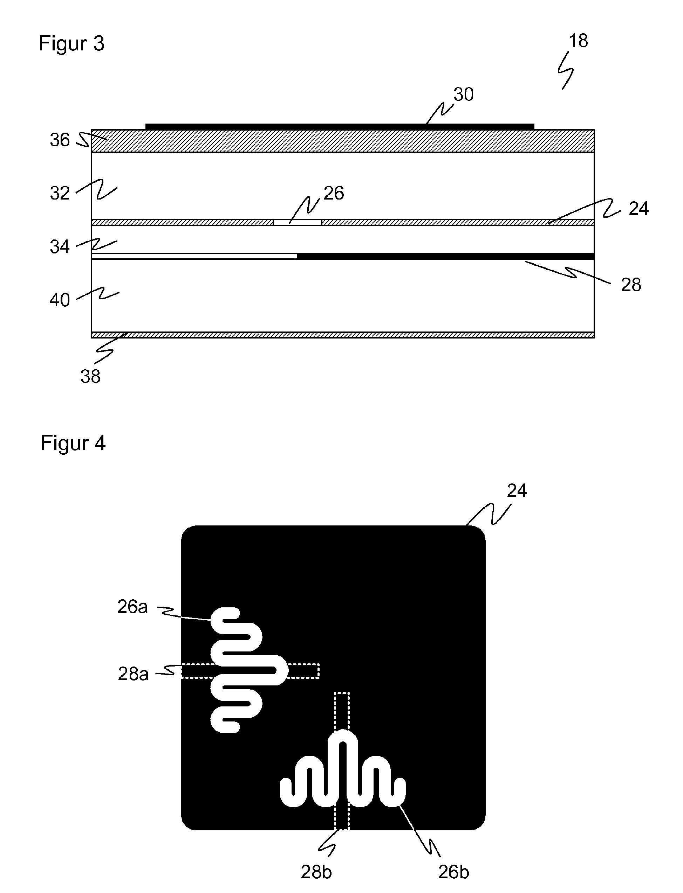

Figur 3 zeigt den Schichtaufbau der Antenne 18. Dabei ist eine Vielzahl von Schichten dargestellt, die nicht zwingend sämtlich vorhanden sein müssen. In einer minimalen Konfiguration ist eine Grundplatine 24 beispielsweise aus einem auch für Leiterplatten genutzten Substrat mit einem Schlitz 26 mit einer darunter angeordneten Speiseleitung 28 ohne Abschluss, d. h. mit offenem Ende. Bei geeigneter Dimensionierung wirkt der Schlitz 26 bereits als strahlendes Element beziehungsweise als Antenne.

Um die Bandbreite und Richtwirkung der Antenne 18 zu verbessern, kann oberhalb des Schlitzes 26 ein flächenartiger Resonator 30 aus leitendem Material angeordnet werden, wobei der Resonator 30 häufig als Patchelement bezeichnet wird und auf die gewünschte Resonanzfrequenz der Antenne 18 abgestimmt ist.

Die Zwischenräume zwischen dem Resonator 30 und der Grundplatine 24 sowie zwischen der Grundplatine 24 und der Speiseleitung 28 können durch Luftspalte 32, 34 oder Dielektrika 36 gebildet sein. Dabei sind alle Mischformen denkbar, also nur ein Luftspalt, nur ein Dielektrikum, oder beides auch mehrschichtig mit verschiedenen Materialien, beispielsweise in Form einer mehrlagigen Platine.

Unterhalb der Grundplatine 24 kann eine weitere Platine 38 genutzt werden, um die Richtwirkung der Antenne 18 zu erhöhen. Der Zwischenraum zwischen der Speiseleitung 28 und der weiteren Platine 38 kann wie die übrigen Zwischenräume durch einen Luftspalt 40 und/oder ein Dielektrikum gefüllt sein. Der Vorteil davon, allein mit Luftspalten ohne zusätzliche Dielektrika auszukommen, liegt darin, dass keine Beeinträchtigungen der Bandbreite oder Veränderungen der Resonanzfrequenz der Antenne 18 durch Toleranzen in den Dielektrizitätskonstanten auftreten.

Figur 4 zeigt eine Draufsicht auf die Grundplatine 24 mit zwei Schlitzen 26a-b. Die zugehörigen Speiseleitungen 28a-b befinden sich auf der Rückseite der Grundplatine 24 und sind daher gestrichelt dargestellt. In dieser Ausführungsform kann die Antenne in zwei Ebenen angeregt werden, um ein zirkular polarisiertes Signal oder zwei zueinander orthogonal linear polarisierte, voneinander entkoppelte Signale zu erzeugen. In einer nicht dargestellten Alternative ist nur ein Schlitz vorgesehen, mit dem dann ein linear polarisiertes Signal erzeugt wird.

Um auf einer möglichst kleinen Grundplatine 24 Schlitze 26a-b für eine größere Wellenlänge unterzubringen, beispielsweise für Frequenzbereiche von 865-868 MHz oder 902-928 MHz, sind die Schlitze 26a-b in sich gefaltet und bilden so ein zweidimensionales Muster. In Figur 4 ist dieses Muster beispielhaft in Form mehrerer Bögen ausgebildet, wobei der mittlere Bogen die größte Höhe aufweist und die seitlichen Bögen mit zunehmendem Abstand von dem mittleren Bogen kleiner werden. Die Anzahl der Bögen ist ebenso wie deren konkrete Abmessungen beispielhaft zu verstehen und eine Variable des Antennendesigns entsprechend der gewünschten Resonanzfrequenz. Die Schlitze 26a-b bilden ein insgesamt zur Mittenachse symmetrisches Muster, wobei die Speiseleitungen 28a-b längs der Mittenachse angeordnet sind. Die Bögen enden in der Ausführungsform gemäß Figur 4 auf einer gemeinsamen Grundlinie. Alternativ schwingen die Bögen um eine Grundlinie nach oben und unten aus. Weiterhin können die Schlitze 26a-b abweichend von der Darstellung in verbreiterten Endpunkten münden.

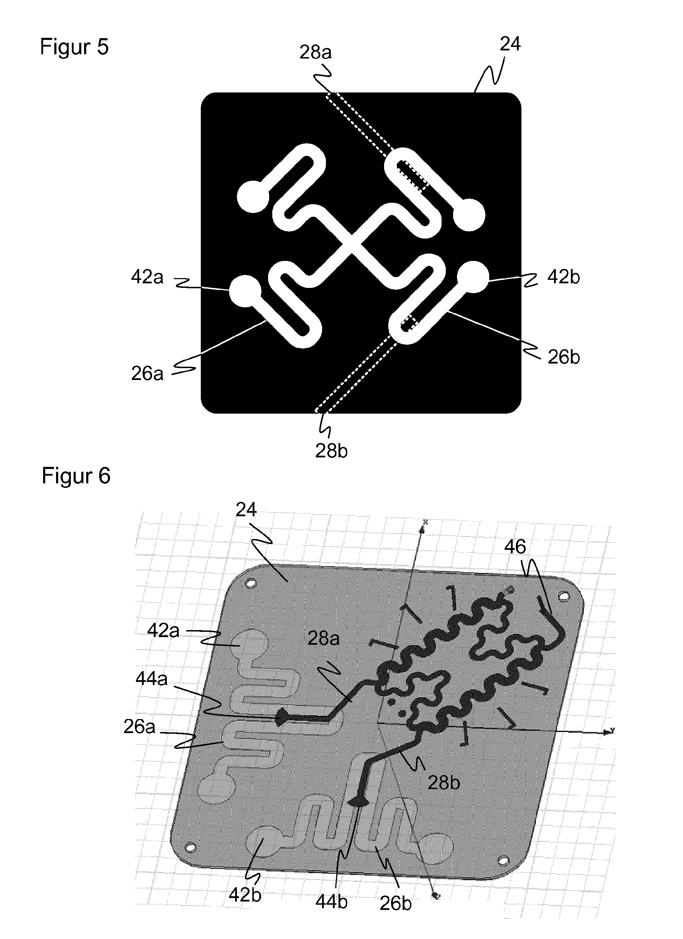

Figur 5 zeigt eine Draufsicht auf die Grundplatine 24 in einer alternativen Ausgestaltung mit zwei sich kreuzenden Schlitzen 26a-b. Dies ermöglicht eine kompakte Unterbringung der beiden Schlitze 26a-b, die aber ungeachtet des gemeinsamen Schnittpunkts praktisch weiterhin wie die zwei Schlitze 26a-b wirken. Die Bogenstruktur ist gegenüber der Figur 4 variiert, einerseits um die Möglichkeiten der Faltung der Schlitze 26a-b zu einem zweidimensionalen Muster mit einem weiteren Beispiel zu illustrieren, andererseits um die Überschneidung in nur einem Punkt zu ermöglichen. Die Schlitze 26a-b münden hier in optional verbreiterten Endpunkten 42a-b, wie dies schon als mögliche Ausgestaltung zu Figur 4 erläutert wurde.

Fig. 6 zeigt erneut die Grundplatine 24 mit den schon aus Figur 4 bekannten Schlitzen 26a-b, nun aber von der Unterseite her, um mögliche Ausgestaltungen die Speiseleitungen 28a-b zu erläutern. In der dargestellten Ausführungsform bilden die Speiseleitungen einen in Streifenleitungstechnik ausgeführten Leistungsteiler, mit dessen Hilfe ein eingespeistes Signal auf zwei gleich große, um 90° gegeneinander phasenversetzte Signalanteile aufgespaltet wird. Diese Signalanteile bewegen sich dann auf die beiden offenen Enden 44a-b zu. Dort würde es normalerweise zu einer Totalreflexion der Signale kommen. Da sich jedoch direkt über der Reflexionsstelle an den Enden 44a-b die Schlitze 26a-b als resonante Struktur befinden, koppelt das Signal auf den oberhalb angeordneten Resonator 30 ein. Da weiterhin beide Schlitze 26a-b mit zueinander um 90° versetzten Signalanteilen gespeist werden, strahlt der Resonator 30 insgesamt eine zirkular polarisierte Welle aus.

Ähnlich wie die Schlitze 26a-b sind auch die Speiseleitungen 28a-b vorzugsweise in sich gefaltet und bilden ein zweidimensionales Muster. Dadurch lässt sich in einem Frequenzbereich um 900 MHz der Platzbedarf für die Speiseleitungen 28a-b auf der Grundplatine 24 um mehr als 60% verringern.

In dem dargestellten Beispiel erfolgt die Faltung erneut mit Hilfe von hier untereinander gleichgroßen und kreisförmigen Bögen. Die Speiseleitungen 28a-b bilden dabei die Grundform eines Rechtecks, dessen Seiten durch Bögen effektiv erheblich verlängert sind. An den kurzen Seiten dieses Rechtecks ist zudem eine Ausbuchtung nach Innen vorgesehen, die ebenfalls von Bögen überlagert wird. Durch die unterschiedlichen Leitungslängen von dem gemeinsamen Kontaktierungspunkt 46 wird der gewünschte Phasenversatz der beiden Signalanteile erzielt. Eine gleiche Dicke der Speiseleitungen 28a-b sorgt für gleiche Widerstände und damit eine gleichmäßige Leistungsteilung. Es sei noch erwähnt, dass die nicht leitend verbundenen Beinchen und Augen der Leitungsstruktur keine technische Bedeutung haben.

Das von den Speiseleitungen 28a-b gebildete Rechteck steht insgesamt in einem 45°-Winkel zu den Schlitzen 28a-b und ist dagegen auf der Grundplatine 24 versetzt angeordnet. Damit wird die vorhandene Fläche der Grundplatine 24 ohne gegenseitigen Überlapp, außer an den gewünschten Kontaktierungen zur Einkopplung, optimal genutzt.

Die Antenne 18 zeigt damit eine Reihe von Vorteilen. Die beiden Schlitze 26a-b sind innerhalb einer Ebene räumlich entkoppelt und beanspruchen wegen der Faltung nur eine Grundfläche mit deutlich verringerten Außenabmessungen. Indem beide Speiseleitungen 28a-b in einer Ebene liegen, wird keine zusätzliche Zwischenlage in Form eines Luftspaltes oder eines Dielektrikums zu deren Trennung benötigt. Der Leistungsteiler und die Speiseleitungen 28a-b werden auf einer Substratebene mit sehr geringer Grundfläche kombiniert. Auch der Resonator 30 kann zur Flächenreduktion als Muster ausgebildet werden, beispielsweise als Faltung mit einem Grundmuster oder als Fraktal. Dadurch wird die Antenne 18 noch kompakter.

## Patentansprüche

1. Patchantenne (18) für eine RFID-Lesevorrichtung (10) mit einer Grundplatine (24), die mindestens einen Schlitz (26) und eine Kontaktierung (28) an dem Schlitz (26) zum Einspeisen und/oder Abgreifen eines elektromagnetischen Signals aufweist, und mit einem flächenartigen Resonator (30) parallel zu der Grundplatine (24), wobei das Signal über den Schlitz (26) kapazitiv in den Resonator (30) eingekoppelt wird oder umgekehrt,
**dadurch gekennzeichnet,**
**dass** der Schlitz (26) mehrere Bögen aufweist, dadurch in sich gefaltet ist und so ein zweidimensionales Muster auf der Grundplatine (24) bildet,
wobei ein mittlerer Bogen die größte Höhe aufweist und Bögen zu den Seiten mit zunehmendem Abstand von dem mittleren Bogen eine geringere Höhe aufweisen.

2. Antenne (18) nach Anspruch 1, wobei der Schlitz (26) vergrößerte Endpunkte (42) aufweist.

3. Antenne (10) nach einem der vorhergehenden Ansprüche, wobei die Grundplatine (24) zwei Schlitze (26a-b) aufweist.

4. Antenne (18) nach Anspruch 3, wobei die beiden Schlitze (26a-b) einander schneiden.

5. Antenne (18) nach Anspruch 3 oder 4, wobei die beiden Schlitze (26a-b) jeweils eine Kontaktierung aufweisen, die von einer Streifenleitung (28a-b) gebildet ist.

6. Antenne (18) nach Anspruch 5, wobei die Streifenleitungen (28a-b) einen Leistungsteiler bilden.

7. Antenne (18) nach Anspruch 5 oder 6, wobei die Streifenleitungen (28a-b) in sich gefaltet sind und so ein zweidimensionales Muster auf der Grundplatine (24) bilden.

8. Antenne (18) nach einem der Ansprüche 5 bis 7, wobei die Streifenleitungen (28a-b) die Grundform eines Rechtecks bilden, welches an seinen Seiten eine Vielzahl von Bögen aufweist.

9. Antenne (18) nach einem der Ansprüche 5 bis 8, wobei die Streifenleitungen (28a-b) an den Schmalseiten des Rechtecks eine Ausbuchtung nach Innen bilden, die größer ist als die Bögen.

10. RFID-Lesevorrichtung (10) mit mindestens einer Antenne (18) nach einem der vorhergehenden Ansprüche zum Senden von RFID-Signalen an einen RFID-Transponder (16) und/oder zum Empfangen von RFID-Signalen von einem RFID-Transponder (16) und mit einer Auswertungseinheit (20) zum Eincodieren einer RFID-Information in die RFID-Signale und/oder zum Auslesen einer RFID-Information aus den RFID-Signalen.

11. RFID-Lesevorrichtung (10) nach Anspruch 10 für die stationäre Montage an einem Lesebereich eines Förderers (12) oder eines Leseportals zum Auslesen mindestens eines auf dem Förderer (12) oder durch das Leseportal bewegten RFID-Transponders (16).

12. Verfahren zum Aussenden und/oder Empfangen von elektromagnetischen Signalen, insbesondere RFID-Signalen, mit einer Antenne (18) nach einem der Ansprüche 1 bis 9.

## Claims

1. A patch antenna (18) for an RFID reading apparatus (10) having a circuit board (24) which has at least one slot (26) and a contact (28) at the slot (26) for feeding and/or picking up an electromagnetic signal and having a planar resonator (30) in parallel with the circuit board (24), wherein the signal is capacitively coupled into the resonator (30) via the slot (26) or vice versa,
**characterized in that** the slot (26) has a plurality of arcs, thus is folded into itself and so forms a two-dimensional pattern on the circuit board (24), wherein a middle arc has the greatest height and arcs at the sides have a smaller height as the distance from the middle arc increases.

2. The antenna (18) in accordance with claim 1,
wherein the slot (26) has enlarged end points (42).

3. The antenna (18) in accordance with any of the preceding claims,
wherein the circuit board (24) has two slots (26a-b).

4. The antenna (18) in accordance with claim 3,
wherein the two slots (26a-b) intersect one another.

5. The antenna (18) in accordance with claim 3 or 4,
wherein the two slots (26a-b) each have a contact which is formed by a microstrip (28a-b).

6. The antenna (18) in accordance with claim 5,
wherein the microstrips (28a-b) form a power divider.

7. The antenna (18) in accordance with claim 5 or 6,
wherein the microstrips (28a-b) are folded into themselves and so form a two-dimensional pattern on the circuit board (24).

8. The antenna (18) in accordance with any of claims 5 to 7,
wherein the microstrips (28a-b) form the base shape of a rectangle which has a plurality of arcs at its side.

9. The antenna (18) in accordance with any of claims 5 to 8,
wherein the microstrips (28a-b) form a dimple inwardly which is larger than the arcs at the narrow sides of the rectangle.

10. An RFID reading apparatus (10) having at least one antenna (18) according to any of the preceding claims suitable for transmitting RFID signals to an RFID transponder (16) and/or for receiving RFID signals from an RFID transponder (16) and further having an evaluation unit (20) for encoding RFID information into the RFID signals and/or for reading RFID information out of the RFID signals.

11. The RFID reading apparatus (10) in accordance with claim 10 for the stationary installation a reading zone of a conveyor (12) or of a reading portal for reading out at least one RFID transponder (16) moved on the conveyor (12) or through the reading portal.

12. A method of transmitting and/or receiving electromagnetic signals, in particular RFID signals, using an antenna (18) according to any of claims 1 to 9.

## Revendications

1. Antenne "patch" (18) pour un dispositif de lecture de RFID (10) comprenant une platine de base (24) qui comporte au moins une fente (26) et un moyen de mise en contact (28) au niveau de la fente (26) pour injecter et/ou pour palper un signal électromagnétique, et comprenant un résonateur surfacique (30) parallèle à la platine de base (24), dans laquelle le signal est couplé via la fente (26) de manière capacitive vers le résonateur (30) ou inversement,
**caractérisée en ce que**
la fente (26) comprend plusieurs arcs, est de ce fait repliée sur elle-même et forme ainsi un motif bidimensionnel sur la platine de base (24),
dans laquelle un arc médian présente la plus grande hauteur et des arcs vers les côtés présentent une hauteur qui diminue lorsque la distance depuis l'arc médian augmente.

2. Antenne (18) selon la revendication 1,
dans laquelle la fente (26) comporte des points d'extrémité agrandis (42).

3. Antenne (10) selon l'une des revendications précédentes,
dans laquelle la platine de base (24) comporte deux fentes (26a-b).

4. Antenne (18) selon la revendication 3,
dans laquelle les deux fentes (26a-b) se recoupent mutuellement.

5. Antenne (18) selon la revendication 3 ou 4,
dans laquelle les deux fentes (26a-b) comportent chacune un moyen de mise en contact, qui est formé par une ligne en bande (28a-b).

6. Antenne (18) selon la revendication 5,
dans laquelle les lignes en bande (28a-b) forment un répartiteur de puissance.

7. Antenne (18) selon la revendication 5 ou 6,
dans laquelle les lignes en bande (28a-b) sont repliées sur elle-même et forment ainsi un motif bidimensionnel sur la platine de base (24).

8. Antenne (18) selon l'une des revendications 5 à 7,
dans laquelle les lignes en bande (28a-b) constituent la forme de base d'un rectangle, lequel comporte une pluralité d'arcs sur ses côtés.

9. Antenne (18) selon l'une des revendications 5 à 8,
dans laquelle les lignes en bande (28a-b) forment, au niveau des petits côtés du rectangle, un creux qui est plus grand que les arcs.

10. Dispositif de lecture RFID (10) comprenant au moins une antenne (18) selon l'une des revendications précédentes pour émettre des signaux RFID vers un transpondeur RFID (16) et/ou pour recevoir des signaux RFID depuis un transpondeur RFID (16), et comprenant une unité d'évaluation (20) pour coder une information RFID dans les signaux RFID et/ou pour lire une information RFID à partir des signaux RFID.

11. Dispositif de lecture RFID (10) selon la revendication 10, pour le montage stationnaire sur une zone de lecture d'un convoyeur (12) ou d'un portique de lecture afin de lire au moins un transpondeur RFID (16) déplacé sur le convoyeur (12) ou déplacé par le portique de lecture.

12. Procédé pour émettre et/ou recevoir des signaux électromagnétiques, en particulier des signaux RFID, au moyen d'une antenne (18) selon l'une des revendications 1 à 9.
